# EUROPÄISCHE PATENTSCHRIFT

(11) **EP 1 486 108 B1**
(45) Veröffentlichungstag und Bekanntmachung des Hinweises auf die Patenterteilung: **16.08.2006**
(21) Anmeldenummer: 04012855.5
(22) Anmeldetag: 01.06.2004
(51) Int. Cl.: A01D 34/82, A01D 75/18

(54) **Mähwerk mit einem Gehäuse**
Mower with housing
Tondeuse avec carter

(30) Priorität: 13.06.2003 DE 20309313 U
(43) Veröffentlichungstag der Anmeldung: 15.12.2004
(73) Patentinhaber: Farm + Garten, STM Vertriebs GmbH, 72829 Engstingen-Kohlstetten (DE)
(72) Erfinder: Bauer, Frank, 91781 Weissenburg (DE)
(74) Vertreter: Witzany, Manfred

(56) Entgegenhaltungen:
- US-A- 3 375 643
- US-A- 3 474 601
- US-A- 3 625 537
- US-A1- 2003 079 454

## Beschreibung

Die Erfindung betrifft ein Mähwerk, bestehend aus einem rotierenden Messerträger in einem Gehäuse, gemäß dem Oberbegriff des Patentanspruchs 1.

Aus der EP 0 532 068 B1 ist ein Rasentraktor bekannt, dessen Mähwerk in vertikaler Richtung verstellbar gehalten ist. Diese Verstellbarkeit des Mähwerks dient ausschließlich der Einstellung der Schnitthöhe, wobei während des Betriebs die Höhenverstellbarkeit des Mähwerks arretiert ist. Fährt das Mähwerk gegen einen größeren Stein, so wird das Mähwerksgehäuse entsprechend deformiert und ggf. zerstört.

Aus der US 2003/079454 A1 ist ein gattungsgemäßer Rasentraktor bekannt, der einen mit Messern versehenen rotierenden Messerträger aufweist. Dieser Messerträger ist von einem unten offenen Gehäuse umgeben, der im wesentlichen als Berührungsschutz für die rotierenden Messer dient. Das Gehäuse ist über Führungsschienen am Fahrzeugrahmen abgestützt, die vertikal ausgerichtet sind. In diese Führungsschienen greifen Schwenkarme ein, die zusammen mit dem Fahrzeugrahmen und dem Gehäuse eine Parallelogrammführung ergeben. Diese Parallelogrammführung ist mit einer Handhabe verbunden, die zur Höheneinstellung des Mähwerks dient. Fällt ein Rad des Rasentraktors in eine Vertiefung des Bodens, so kann das Gehäuse über ein gewisses Maß entlang der vertikalen Führungen nach oben ausweichen, um auf diese Weise Beschädigungen des Gehäuses vorzubeugen. Stößt dagegen das Gehäuse während der Fahrt des Rasentraktors frontal gegen einen Stein, so muß das Gehäuse von Hand angehoben werden, um dieses Hindernis zu überwinden. Bemerkt der Fahrer jedoch den Stein nicht, so kann das Gehäuse und ggf. auch das Mähwerk beschädigt werden.

Der Erfindung liegt die Aufgabe zugrunde, ein Mähwerk der eingangs genannten Art zu schaffen, welches auch auf steinigem Gelände betriebssicher ist.

Diese Aufgabe wird erfindungsgemäß mit den Merkmalen des Patentanspruchs 1 gelöst.

Das Mähwerk gemäß Anspruch 1 besteht aus einem rotierenden Messerträger, der vorzugsweise von einer Scheibe gebildet ist. Auf diesem Messerträger sind Messer gehalten, die bei der Umdrehung des Messerträgers das Mähgut schneiden. Zum Schutz vor Berührungen der Messer ist der Messerträger von einem unten offenen Gehäuse umgeben, an dem der Messerträger drehbar abgestützt ist. Um zu verhindern, daß das Mähwerk, insbesondere das Gehäuse, beim Auftreffen auf Hindernisse, wie beispielsweise Steine, beschädigt wird, ist das Gehäuse an Führungsschienen verschiebbar gehalten, welche von unten nach oben zum Fahrzeugheck hin geneigt sind. Die Verschiebbarkeit des Gehäuses entlang der Führungsschienen bleibt dabei auch während des Mähens erhalten. Trifft das Gehäuse auf ein Hindernis, so wird es relativ zum Fahrzeug betrachtet, auf das Fahrzeugheck zubewegt. Durch die Wirkung der Führungsschienen wird dieser Bewegung eine vertikale Bewegung überlagert, so daß das Gehäuse angehoben wird. Das Mähwerk kann auf diese Weise problemlos dem Hindernis ausweichen, indem es entsprechend der Höhe des Hindernisses selbsttätig angehoben wird. Auf diese Weise wird eine Beschädigung des Mähwerks und insbesondere des Gehäuses verhindert.

Für den Anstellwinkel der Führungsschienen zur Vertikalen hat sich gemäß Anspruch 2 ein Bereich zwischen 10° und 60°, vorzugsweise um 20°, bewährt. Bei einem Anstellwinkel unter 10° ergibt sich das Problem, daß die Führungsschienen klemmen können, so daß das Gehäuse dem Hindernis nicht ausreichend sicher ausweichen kann. Bei einem Anstellwinkel von über 60° ergibt sich dagegen eine beträchtliche horizontale Verschiebung des Mähwerks zum Fahrzeug, so daß die Kraftübertragung auf das Mähwerk und die Anbindung des Auswurfschachtes relativ schwierig werden. Bei einem Anstellwinkel von 20° ergibt sich eine ausreichende Sicherheit gegen Klemmen der Führungsschienen, wobei die horizontale Bewegung des Mähwerks zum Fahrzeug vernachlässigbar klein bleibt.

Zur Erzielung einer reibungsarmen und damit leicht beweglichen Abstützung des Mähwerks am Fahrzeug ist es gemäß Anspruch 3 vorteilhaft, wenn in die Führungsschienen Rollenlager eingreifen.

Um die beweglichen Massen möglichst klein zu halten, ist es gemäß Anspruch 4 vorteilhaft, wenn die Führungsschienen fest am Fahrzeugrahmen abgestützt sind. Damit müssen lediglich die Eingriffselemente in die Führungsschienen am bewegbaren Gehäuse vorgesehen sein.

Um die Winkellage des Mähwerks einjustieren zu können, ist es gemäß Anspruch 5 günstig, wenn die am Gehäuse vorgesehenen Eingriffselemente für die Führungsschienen in ihrem gegenseitigen Abstand verstellbar sind. Damit kann die Winkellage des Mähwerks besonders feinfühlig eingestellt werden.

Schließlich ist es gemäß Anspruch 6 günstig, wenn die Eingriffselemente über eine Gewindespindel verstellbar sind. Auf diese Weise läßt sich eine besonders genaue Einstellung der Winkellage des Mähwerks erzielen, wobei die gewählte Einstellung ohne weitere Maßnahmen auch im rauhen landwirtschaftlichen Betrieb erhalten bleibt.

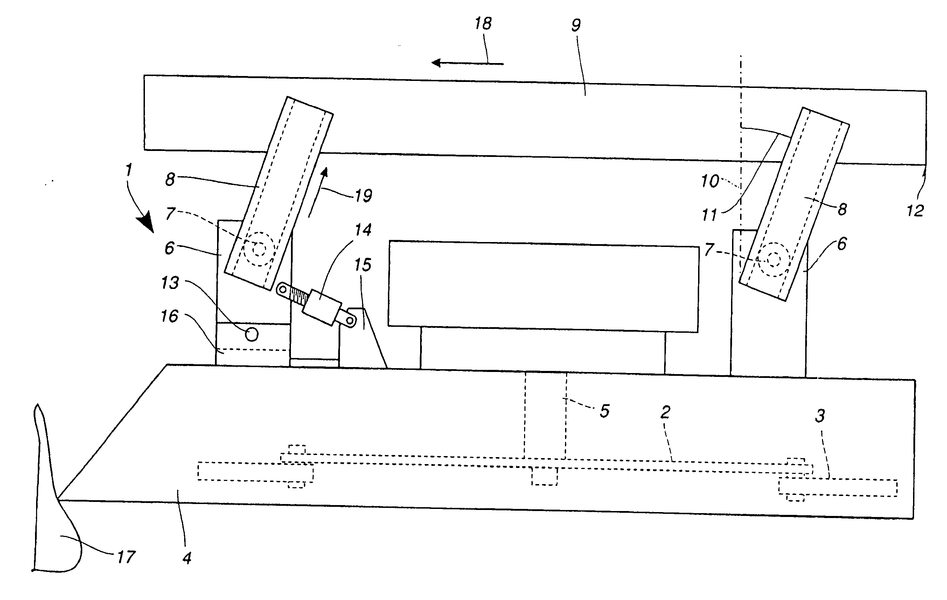

Der Erfindungsgegenstand wird beispielhaft anhand der Zeichnung erläutert, ohne den Schutzumfang zu beschränken.

Die einzige Figur zeigt eine schematische Seitenansicht eines Mähwerks 1. Das Mähwerk 1 weist einen rotierenden Messerträger 2 in Form einer Scheibe auf, an der außenseitig Messer 3 verschwenkbar gehalten sind. Um den Messerträger 2 ist ein Gehäuse 4 vorgesehen, das einen Berührungsschutz für die Messer 3 bildet. Das Gehäuse 4 ist unten offen ausgebildet. Im Gehäuse 4 ist eine Antriebswelle 5 drehbar abgestützt, die den Messerträger 2 in eine rotierende Bewegung versetzt.

Am Gehäuse 4 sind oberseitig vier Haltelaschen 6 vorgesehen, die Eingriffselemente 7 in Form von drehbaren Rollen 7 tragen. Diese Eingriffselemente 7 greifen in U-förmige Führungsschienen 8 ein, die fest an einem Fahrzeugrahmen 9 abgestützt, insbesondere festgeschweißt sind. Die Führungsschienen 8 schließen dabei mit einer Vertikalen 10 einen Winkel 11 von ca. 20° ein, wobei sie zum Fahrzeugheck 12 hin nach oben geneigt sind.

Um das Gehäuse 4 in seiner Winkellage einstellen zu können, sind die frontseitigen Laschen 6 über Drehgelenke 13 verschwenkbar am Gehäuse 4 abgestützt. Die Schwenklage der frontseitigen Laschen 6 wird dabei von Gewindespindeln 14 eingestellt, die sich von den frontseitigen Laschen 6 zu Widerlagern 15 erstrecken. Dieses Widerlager 15 ist vorzugsweise einstückig mit einer Aufnahme 16 für das Drehgelenk 13 erstellt.

Durch Verstellen der Gewindespindel 14 kann die Schwenklage der frontseitigen Laschen 6 verändert werden. Auf diese Weise kann der gegenseitige Abstand zwischen den front- und heckseitigen Eingriffselementen 7 variiert werden. Da diese Eingriffselemente 7 in den zueinander parallelen Führungsschienen 8 geführt sind, ergibt sich aufgrund des gegenseitigen Abstands der Eingriffselemente 7 eine bestimmte, einstellbare Winkellage des Gehäuses 4.

Trifft das Gehäuse 4 auf ein Hindernis 17, beispielsweise in Form eines Steines, so wird das Gehäuse 4 in seiner Vorwärtsbewegung 18 gestoppt, während das Fahrzeug mit seinem Rahmen 9 weiterbewegt wird. Aufgrund der Winkellage der Führungsschienen 8 wird das Gehäuse 4 in Richtung 19 verschoben, so daß das Gehäuse 4 zum Fahrzeugrahmen 9 hin angehoben wird. Auf diese Weise wird das Gehäuse 4 so weit angehoben, daß es das Hindernis 17 übergreift. Da die Verschiebbarkeit des Gehäuses 4 auch während des Mähbetriebs aufrechterhalten bleibt, wird auf diese Weise eine Beschädigung des Gehäuses 4 beim Auftreffen auf das Hindernis 17 unterbunden. Wichtig dabei ist, daß das Anheben des Gehäuses 4 beim Auftreffen auf das Hindernis 17 selbsttätig, also ohne Zutun des Fahrers erfolgt.

### Bezugszeichenliste

- 1: Mähwerk
- 2: Messerträger
- 3: Messer
- 4: Gehäuse
- 5: Antriebswelle
- 6: Haltelasche
- 7: Eingriffselement
- 8: Führungsschiene
- 9: Fahrzeugrahmen
- 10: Vertikale
- 11: Anstellwinkel
- 12: Fahrzeugheck
- 13: Drehgelenk
- 14: Gewindespindel
- 15: Widerlager
- 16: Aufnahme
- 17: Hindernis
- 18: Vorwärtsbewegung
- 19: Verschiebung

## Patentansprüche

1. Mähwerk mit mindestens einem rotierenden Messerträger (2), der von einem zumindest unten offenen Gehäuse (4) umgeben ist, welches an einem Fahrzeugrahmen (9) abgestützt ist, wobei das Gehäuse (2) in Führungsschienen (8) verschiebbar abgestützt ist, **dadurch gekennzeichnet, daß** die Führungsschienen (8) von unten nach oben zum Fahrzeugheck (12) geneigt sind, und die beim Auftreffen des Gehäuses (2) auf ein Hindernis (17) eine Verschiebung (19) des Gehäuses (2) entlang der Führungsschienen (8) ermöglichen.

2. Mähwerk nach Anspruch 1, **dadurch gekennzeichnet, daß** die Führungsschienen (8) mit der Vertikalen (10) einen Winkel (11) zwischen 10° und 60°, vorzugsweise um 20° einschließen.

3. Mähwerk nach Anspruch 1 oder 2, **dadurch gekennzeichnet, daß** in die Führungsschienen (8) Rollenlager (7) eingreifen.

4. Mähwerk nach mindestens einem der Ansprüche 1 bis 3, **dadurch gekennzeichnet, daß** die Führungsschienen (8) fest am Fahrzeugrahmen (9) abgestützt sind.

5. Mähwerk nach Anspruch 4, **dadurch gekennzeichnet, daß** am Gehäuse (4) Eingriffselemente (7) vorgesehen sind, die in die Führungsschienen (8) eingreifen, und deren gegenseitiger Abstand einstellbar ist, um die Winkellage des Gehäuses (4) einzustellen.

6. Mähwerk nach Anspruch 5, **dadurch gekennzeichnet, daß** die Eingriffselemente (7) über eine Gewindespindel (14) verstellbar sind.

## Claims

1. Mower, having at least one rotating blade carrier (2), which is surrounded by at least one open housing (4) supported on a vehicle frame (9), the housing (2) being displaceably supported in guide rails (8), **characterized in that** the guide rails (8) are inclined from the bottom upwards relative to the vehicle rear end (12) and, when the housing (2) strikes an obstacle (17), allow a displacement (19) of the housing (2) along the guide rails (8).

2. Mower according to Claim 1, **characterized in that** the guide rails (8) form with the vertical (10) an angle (11) of between 10° and 60°, preferably of around 20°.

3. Mower according to Claim 1 or 2, **characterized in that** roller bearings (7) engage in the guide rails (8).

4. Mower according to at least one of Claims 1 to 3, **characterized in that** the guide rails (8) are fixedly supported on the vehicle frame (9).

5. Mower according to Claim 4, **characterized in that** engagement elements (7) are provided on the housing (4), which engage in the guide rails (8) and the mutual spacing of which can be adjusted so as to adjust the angular position of the housing (4).

6. Mower according to Claim 5, **characterized in that** the engagement elements (7) are adjustable by means of a threaded spindle (14).

## Revendications

1. Tondeuse avec au moins un support de lame rotatif (2), qui est entouré par un carter (4) au moins ouvert vers le bas, qui est supporté sur un châssis du véhicule (9), le carter (4) étant supporté de manière déplaçable dans des rails de guidage (8), **caractérisée en ce que** les rails de guidage (8) sont inclinés de bas en haut vers l'arrière du véhicule (12), et permettant un déplacement (19) du carter (4) le long des rails de guidage (8) dans le cas du passage du carter (4) sur un obstacle (17).

2. Tondeuse selon la revendication 1, **caractérisée en ce que** les rails de guidage (8) forment avec la verticale (10) un angle (11) compris entre 10° et 60°, de préférence de 20°.

3. Tondeuse selon la revendication 1 ou 2, **caractérisée en ce que** des paliers à rouleaux (7) viennent en prise dans les rails de guidage (8).

4. Tondeuse selon au moins l'une quelconque des revendications 1 à 3, **caractérisée en ce que** les rails de guidage (8) sont supportés fixement sur le châssis du véhicule (9).

5. Tondeuse selon la revendication 4, **caractérisée en ce que** des éléments d'engagement (7) sont prévus sur le carter (4), lesquels viennent en prise dans les rails de guidage (8) et dont l'écartement mutuel peut être ajusté afin d'ajuster la position angulaire du carter (4).

6. Tondeuse selon la revendication 5, **caractérisée en ce que** les éléments d'engagement (7) peuvent être déplacés par le biais d'une broche filetée (14).
